# EUROPEAN PATENT APPLICATION

(11) **EP 4 195 647 A1**
(43) Date of publication of application: **14.06.2023**
(21) Application number: 21863440.0
(22) Date of filing: 03.08.2021
(51) Int. Cl.: H04N 5/222, H04N 5/232, H04N 5/262

(54) **IMAGE PROCESSING METHOD, MOBILE TERMINAL, AND STORAGE MEDIUM**

(30) Priority: 01.09.2020 CN 202010902607
(71) Applicant: Petal Cloud Technology Co., Ltd., Dongguan, Guangdong 523799 (CN)
(72) Inventor: ZOU, Tao, Shenzhen, Guangdong 518129 (CN)
(74) Representative: Pfenning, Meinig & Partner mbB
(86) International application number: PCT/CN2021/110201
(87) International publication number: WO 2022/048372

(57) **Abstract**

Embodiments of this application provide an image processing method, a mobile terminal, and a storage medium, and relate to the field of communication technologies. The method includes: displaying a preview screen in response to a detected first operation; determining a virtual object; obtaining first positioning information of the virtual object, and displaying the virtual object in the preview screen based on the first positioning information; generating a first image and a second image in response to a detected second operation; and synthesizing the first image and the second image based on the first positioning information to generate a third image, and displaying the third image. The third image is associated with the first image and the virtual object. According to the image processing method provided in embodiments of this application, image shooting can be completed in a virtual-reality integration manner, a virtual image can be edited on a shot image, and distortion of an edited image can be avoided.

## Description

This application claims priority to Chinese Patent Application No. 202010902607.4, filed with the China National Intellectual Property Administration on September 1, 2020 and entitled "IMAGE PROCESSING METHOD, MOBILE TERMINAL, AND STORAGE MEDIUM", which is incorporated herein by reference in its entirety.

### TECHNICAL FIELD

Embodiments of this application relate to the field of communication technologies, and in particular, to an image processing method, a mobile terminal, and a storage medium.

### BACKGROUND

With continuous development of photographing technologies and widespread use of mobile terminals, a photographing function of a mobile terminal is increasingly favored by people. In addition, with rapid development of an augmented reality (Augmented Reality, AR) technology, virtual content (for example, a 3D model) can be loaded into a real scene. Based on this, an AR shooting application is developed, that is, the 3D model can be loaded into a real environment, and then the real environment (including a real character, animal, or object) and the 3D model are photographed.

### SUMMARY

Embodiments of this application provide an image processing method, a mobile terminal, and a storage medium, to provide an image processing manner. In this manner, image shooting in a virtual-reality integration shooting mode can be completed, a virtual image can be edited on a shot image, and distortion of an edited image can be avoided.

According to a first aspect, an embodiment of this application provides an image processing method, including:
A preview screen is displayed in response to a detected first operation. The preview screen includes a real environment picture. Specifically, the first operation may include an operation of enabling a camera by a user, or may include an operation of invoking the camera in an application, so that the preview screen may be displayed.

A virtual object is determined in response to a detected second operation. Specifically, the second operation may include an operation of selecting a shooting mode by the user and an operation of selecting the virtual object. For example, the user may select a virtual-reality integration shooting mode on the preview screen, to enter the virtual-reality integration shooting mode. In this case, in the virtual-reality integration shooting mode, the preview screen may display at least one candidate virtual object to be selected by the user, and the user may randomly select one of the candidate virtual object to determine the virtual object.

First positioning information of the virtual object is obtained, and the virtual object is displayed on the preview screen based on the first positioning information. Specifically, the first positioning information may include size information and angle information of the virtual object, and location information of the first virtual object on the preview screen. The first positioning information may be default location information, default size information, and default angle information, or may be location information, size information, and angle information of the virtual object adjusted by the user. For example, the user may perform adjustment such as dragging, scaling, and rotation on the virtual object.

A first image and a second image are generated in response to a detected third operation. The first image includes the real environment picture, and the second image includes the virtual object corresponding to the first positioning information. Specifically, the first image may correspond to the real environment picture, and therefore does not include the virtual object. The second image may correspond to the virtual object corresponding to the first positioning information, and therefore does not include the real environment picture.

The first image and the second image are synthesized based on the first positioning information to generate a third image, and the third image is displayed. The third image is associated with the first image and the virtual object. Specifically, the third image may be a synthetic image of the first image and the second image. For example, the second image may be superimposed on the first image, to obtain the third image. In addition, a file of the third image may be associated with a file of the first image and a file of the virtual object, to invoke the first image and the virtual object when the user edits the third image.

In a possible implementation, that a virtual object is determined in response to a detected second operation includes:
At least one candidate virtual object is displayed in response to the detected second operation.

The virtual object in the candidate virtual object is determined in response to a detected fourth operation.

In a possible implementation, that at least one candidate virtual object is displayed in response to the detected second operation includes:
A type of a real environment on the preview screen is identified in response to the detected second operation, to obtain an environment type. Specifically, the environment type is used to identify a theme of a current real environment. For example, the environment type may include a character, an animal, a household appliance, a building, and the like.

The candidate virtual object is recommended to be displayed based on the environment type. Specifically, a virtual object database may be queried based on the environment type, so that the virtual object may be recommended to be displayed, to avoid multi-page display caused by excessive virtual objects. This improves a matching degree between the virtual object and the real environment, and improves user experience.

In a possible implementation, that first positioning information of the virtual object is obtained includes:
The first positioning information of the virtual object on the preview screen is determined in response to a detected fifth operation. Specifically, the fifth operation may include performing operations such as dragging, scaling, and/or rotating on the virtual object.

In a possible implementation, the first positioning information includes default positioning information of the virtual object.

In a possible implementation, the third image is associated with the first positioning information. Specifically, the positioning information may be default positioning information, or may be positioning information obtained after the user adjusts the virtual object.

In a possible implementation, after the third image is displayed, the method further includes:
The first image and the virtual object that are associated with the third image are separately invoked in response to a detected sixth operation.

The virtual object is displayed in the first image based on the first positioning information, so that a user edits the virtual object.

In a possible implementation, after the virtual object is displayed in the first image, the method further includes:
Second positioning information of the virtual object in the first image is determined in response to a detected seventh operation.

The first image and a fourth image are synthesized based on the second positioning information to generate a fifth image, and the fifth image is displayed. The fourth image includes the virtual object corresponding to the second positioning information, and the fifth image is associated with the first image and the virtual object.

In a possible implementation, after the fifth image is displayed, the method further includes:
overwriting the third image with the fifth image, and performing storage.

According to a second aspect, an embodiment of this application provides an image processing apparatus, including:
a preview module, configured to display a preview screen in response to a detected first operation, where the preview screen includes a real environment picture;
a selection module, configured to determine a virtual object in response to a detected second operation;
an obtaining module, configured to obtain first positioning information of the virtual object, and display the virtual object on the preview screen based on the first positioning information;
a shooting module, configured to generate a first image and a second image in response to a detected third operation, where the first image includes the real environment picture, and the second image includes the virtual object corresponding to the first positioning information; and
a first synthesis module, configured to synthesize the first image and the second image based on the first positioning information to generate a third image, and display the third image, where the third image is associated with the first image and the virtual object.

In a possible implementation, the selection module includes:
a display submodule, configured to display at least one candidate virtual object in response to the detected second operation; and
a selection submodule, configured to determine the virtual object in the candidate virtual object in response to a detected fourth operation.

In a possible implementation, the display submodule includes:
an identification unit, configured to: in response to the detected second operation, identify a type of a real environment in the preview screen, to obtain an environment type; and
a recommendation unit, configured to recommend displaying the candidate virtual object based on the environment type.

In a possible implementation, the obtaining module is further configured to determine the first positioning information of the virtual object on the preview screen in response to a detected fifth operation.

In a possible implementation, the first positioning information includes default positioning information of the virtual object.

In a possible implementation, the third image is associated with the first positioning information.

In a possible implementation, the apparatus further includes:
an invoking module, configured to separately invoke, in response to a detected sixth operation, the first image and the virtual object that are associated with the third image; and
an editing module, configured to display the virtual object in the first image based on the first positioning information, so that a user edits the virtual object.

In a possible implementation, the apparatus further includes:
an updating module, configured to determine second positioning information of the virtual object in the first image in response to a detected seventh operation; and
a second synthesis module, configured to synthesize the first image and a fourth image based on the second positioning information to generate a fifth image, and display the fifth image, where the fourth image includes the virtual object corresponding to the second positioning information, and the fifth image is associated with the first image and the virtual object.

In a possible implementation, the apparatus further includes:
a storage module, configured to overwrite the third image with the fifth image and perform storage.

According to a third aspect, an embodiment of this application provides a mobile terminal, including:
a memory, where the memory is configured to store computer program code, the computer program code includes instructions, and when the mobile terminal reads the instructions from the memory, the mobile terminal is enabled to perform the method according to the first aspect.

According to a fourth aspect, an embodiment of this application provides a computer-readable storage medium. The computer-readable storage medium stores a computer program. When the computer program is run on a computer, the computer is enabled to perform the method according to the first aspect.

According to a fifth aspect, an embodiment of this application provides a computer program. When the computer program is executed by a computer, the computer program is used to perform the method according to the first aspect.

In a possible design, all or some of the programs in the fifth aspect may be stored in a storage medium encapsulated with the processor, or some or all of the programs may be stored in a memory that is not encapsulated with the processor.

### BRIEF DESCRIPTION OF DRAWINGS

FIG. 1 is a schematic diagram of a structure of a mobile terminal according to an embodiment of this application;
FIG. 2 is a flowchart of an image processing method according to an embodiment of this application;
FIG. 3A is a schematic diagram of a shooting mode selection interface according to an embodiment of this application;
FIG. 3B is a schematic diagram of a candidate virtual object display interface according to an embodiment of this application;
FIG. 3C is a schematic diagram of a virtual object selection interface according to an embodiment of this application;
FIG. 4 is a schematic diagram of a virtual object adjustment interface according to an embodiment of this application;
FIG. 5 is a schematic diagram of image synthesis according to an embodiment of this application;
FIG. 6 is a schematic diagram of a synthetic image storage format according to an embodiment of this application;
FIG. 7 is a schematic diagram of a to-be-edited interface of a synthetic image according to an embodiment of this application;
FIG. 8 is a schematic diagram of editing interface of a synthetic image according to an embodiment of this application; and
FIG. 9 is a schematic diagram of a structure of an image processing apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature restricted by "first" or "second" may explicitly or implicitly include one or more features. In the descriptions of embodiments of this application, unless otherwise specified, "a plurality of means two or more than two.

An existing mobile terminal usually includes a camera, and a user may shoot an image by using the camera. With development of an AR technology, people can combine a real scene with a virtual scene. In addition, as the AR technology is applied to camera shooting, the user may photograph a real scene and a virtual scene on one image, for example, may photograph a real character and a virtual character on one image.

However, after the user completes AR shooting, an obtained image is a synthetic image in which a location relationship between a target object (briefly referred to as a real object) in the real scene and a target object (briefly referred to as a virtual object) in the virtual scene is fixed. If the synthetic image needs to be post-edited, for example, if the virtual object in the synthetic image needs to be scaled, only the synthetic image can be scaled. Accordingly, the real object needs to be scaled in a same proportion. This cannot meet a requirement of scaling only the virtual object. In addition, in a scaling process, the synthetic image is also distorted. In addition, because location information of the virtual object in the synthetic image is fixed, rotation and location adjustment of the virtual object cannot be implemented by post-editing. Although image editing software can adjust a location of the virtual object in a cropping manner, an original area from which the virtual object is cropped needs to be filled with information or blanked or blurred, which may cause image distortion. If the virtual object is rotated, because side information of the virtual object is missing in the synthetic image, the image editing software cannot rotate the virtual object.

Based on the foregoing problem, embodiments of this application provide an image processing method, which is applied to a mobile terminal. According to the method, image shooting can be completed in a virtual-reality integration shooting mode, a virtual image can be edited on a shot image, and distortion of an edited image can be avoided.

The mobile terminal may also be referred to as a terminal device, user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The mobile terminal may be a cellular phone, a cordless phone, a personal digital assistant (Personal Digital Assistant, PDA) device, a handheld device with a wireless communication function, a handheld communication device, or a handheld computing device. A specific form of the mobile terminal that performs the technical solution is not specially limited in embodiments of this application.

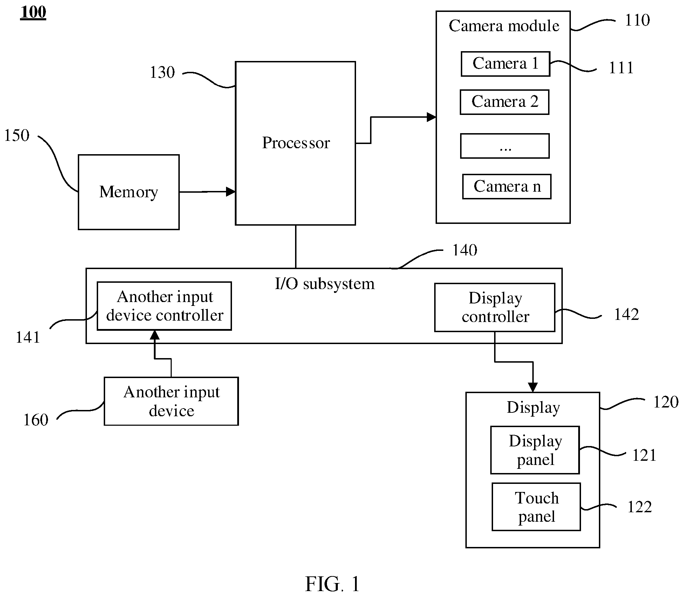

FIG. 1 is a schematic diagram of a structure of a mobile terminal 100 according to an embodiment of this application. The mobile terminal 100 may include a camera module 110, a display 120, a processor 130, an I/O subsystem 140, a memory 150, and another input device 160. The camera module 110 is configured to collect an image, and the display 120 is configured to display the image and an operation interface.

The camera module 110 includes at least one camera 111. If the camera module 110 includes only one camera 111, the camera 111 may be front-facing or rear-facing. If the camera module 110 includes the plurality of cameras 111, the plurality of cameras 111 may be located on a same side of the mobile terminal 100, or may be randomly distributed on two sides of the mobile terminal 100. It should be noted that, if there are the plurality of cameras 111 on any side of the mobile terminal 100, there may be one primary camera on the side. When a user starts shooting, the mobile terminal 100 may enable the primary camera, and may obtain current environment information by using the primary camera. The current environment information is displayed on a preview screen of the mobile terminal 100. In this application, the camera 111 may be configured to capture a current real environment picture.

The display 120 may be configured to display information entered by the user or information provided for the user and various menus of the terminal device 100, and may further accept a user input. Specifically, the display 120 may include a display panel 121 and a touch panel 122. The display panel 121 may be configured in a form of a liquid crystal display (LCD, Liquid Crystal Display), an organic light-emitting diode (OLED, Organic Light-Emitting Diode), or the like. The touch panel 122, also referred to as a touchscreen, may collect a contact operation or a noncontact operation performed by the user on or near the touch panel (for example, an operation performed by the user on the touch panel 122 or near the touch panel 122 by using any suitable object or accessory such as a finger or a stylus, which may further include a body sense operation, where the operation includes operation types such as a single-point control operation and a multi-point control operation), and drive a corresponding connection apparatus based on a preset program. Optionally, the touch panel 122 may include two parts: a touch detection apparatus and a touch controller. The touch detection apparatus detects a touch orientation and posture of the user, detects a signal brought by a touch operation, and transfers the signal to the touch controller. The touch controller receives touch information from the touch detection apparatus, converts the touch information into information that can be processed by the processor, and then sends the information to the processor 130. The touch controller can also receive and execute a command sent by the processor 130. In addition, the touch panel 122 may be implemented by using a plurality of types such as a resistive type, a capacitive type, an infrared type, and a surface acoustic wave type, or the touch panel 122 may be implemented by using any technology developed in the future. Further, the touch panel 122 may cover the display panel 121. The user may perform, based on content displayed on the display panel 121 (the displayed content includes but is not limited to a soft keyboard, a virtual mouse, a virtual key, an icon, and the like), an operation on or near the touch panel 122 that covers the display panel 121. After detecting the operation on or near the touch panel 122, the touch panel 122 transmits the operation to the processor 130 by using the I/O subsystem 140, to determine a user input. Then the processor 130 provides a corresponding visual output on the display panel 121 based on the user input by using the I/O subsystem 140. Although the touch panel 122 and the display panel 121 in FIG. 1 are used as two independent components to implement input and output functions of the terminal device 100, in some embodiments, the touch panel 122 and the display panel 121 may be integrated to implement the input and output functions of the terminal device 100. In this application, the display 120 may be configured to receive an input operation of the user. For example, the user may perform operations such as tapping, sliding, and dragging on the display 120. The display 120 may further display a real environment picture captured by the camera 111.

The processor 130 is a control center of the mobile terminal 100, connects various parts of the entire terminal device by using various interfaces and lines, and performs various functions of and data processing on the mobile terminal 100 by running or executing a software program and/or a module stored in the memory 150 and invoking data stored in the memory 150, so as to perform overall monitoring on the mobile terminal 100. Optionally, the processor 130 may include one or more processing units. Preferably, an application processor and a modem processor may be integrated into the processor 130. The application processor mainly processes an operating system, a user interface, an application, and the like. The modem processor mainly processes wireless communication. It may be understood that the modem processor may not be integrated into the processor 130. In this application, the processor 130 may be configured to synthesize an image in a real environment and a virtual object into one image.

The I/O subsystem 140 is configured to control an external input/output device, and may include another input device controller 141 and a display controller 142. Optionally, one or more another input control device controllers 141 receive a signal from the another input device 160 and/or send a signal to the another input device 160. The another input device 160 may include a physical button (a press button, a rocker button, or the like), a dial, a slider switch, a joystick, a click scroll wheel, and an optical mouse (the optical mouse is a touch-sensitive surface that does not display a visual output, or is an extension of a touch-sensitive surface that includes a touchscreen). It should be noted that the another input control device controller 141 may be connected to any one or more of the foregoing devices. The display controller 142 in the I/O subsystem 140 receives a signal from the display 120 and/or sends a signal to the display 120. After the display 120 detects the user input, the display controller 142 converts the detected user input into interaction with a user interface object displayed on the display 120, to implement human-machine interaction.

The memory 150 may be configured to store the software program and the module, and the processor 130 runs the software program and the module that are stored in the memory 150, to perform various function applications of and data processing on the mobile terminal 100. The memory 150 may include a program storage area and a data storage area. The program storage area may store an operating system, an application required by at least one function (for example, a sound playing function and an image playing function), and the like. The data storage area may store data (for example, audio data and an address book) and the like created based on use of the mobile terminal 100. In addition, the memory 150 may include a high-speed random access memory, and may further include a nonvolatile memory, for example, at least one magnetic disk storage device, a flash memory device, or another volatile solid-state storage device. In this application, the memory 150 may be configured to store a shot image and a photographed virtual object.

The another input device 160 may be configured to receive entered digital or character information, and generate a key signal input related to user settings and function control of the mobile terminal 100. Specifically, the another input device 160 may include but is not limited to one or more of a physical keyboard, a function button (for example, a volume control button or an on/off button), a trackball, a mouse, a joystick, an optical mouse (the optical mouse is a touch-sensitive surface that does not display a visual output, or is an extension of a touch-sensitive surface that includes a touchscreen), and the like. The another input device 160 is connected to the another input device controller 141 of the I/O subsystem 140, and performs signal interaction with the processor 130 under control of the another device input controller 141.

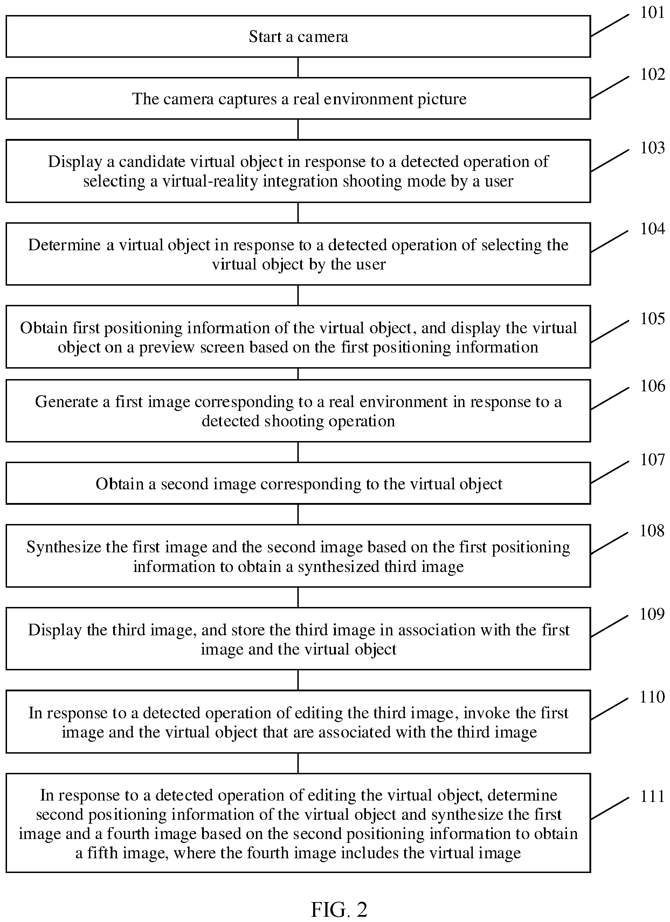

With reference to FIG. 2 to FIG. 8, the image processing method provided in embodiments of this application is described herein. FIG. 2 is a flowchart of an embodiment of the image processing method according to this application. The method may be applied to the mobile terminal 100, and includes the following steps.

Step 101: Start a camera.

Specifically, a user may start the camera by operating an application corresponding to the camera. For example, the user may operate an icon of a camera application on a display interface of the mobile terminal 100, to start the camera. It may be understood that, when the user opens the camera application by operating the icon, the user may tap, double-tap, or slide, or may use another manner. This is not limited in this embodiment of this application.

Optionally, the camera may be started by invoking the camera application in an application. For example, when the user performs a conversation with another user by using a chat application, the user may invoke the camera application in the chat application, so that a photo may be shot in the chat application and then sent to the another user.

Step 102: The camera captures a real environment picture.

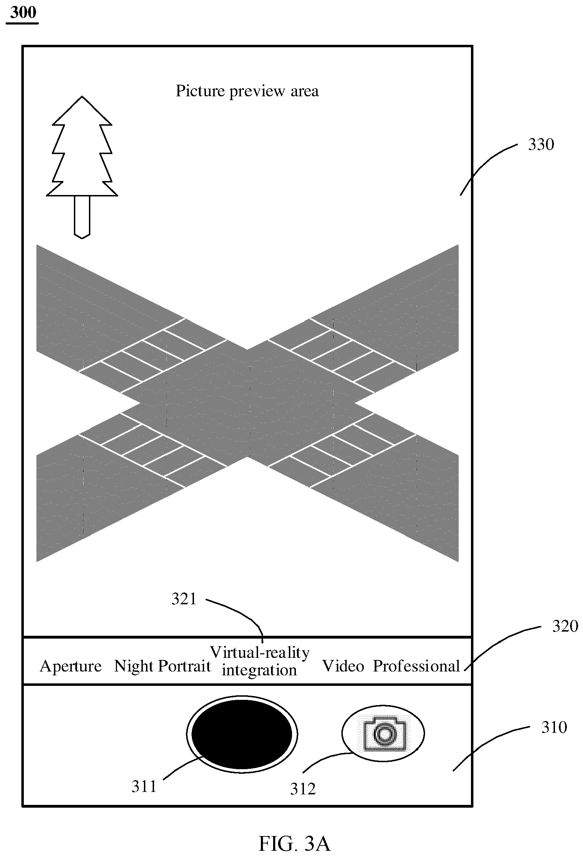

Specifically, after the user starts the camera, the camera may capture the real environment picture, and display the real environment picture on the display 120 of the mobile terminal 100. For example, the display interface of the mobile terminal 100 may be used to display the real environment picture shown in FIG. 3A. Refer to FIG. 3A. A display interface 300 of the mobile terminal 100 includes a shooting operation area 310, a shooting mode selection area 320, and a picture preview area 330. The shooting mode selection area 320 may include a plurality of shooting mode options 321, for example, Aperture, Night, Portrait, Virtual-reality integration, Video, and Professional. The shooting operation area 310 includes a shooting button 311 and a camera switching button 312. The picture preview area 330 is used to display the real environment picture captured by the camera, for example, a street picture shown in FIG. 3A. It should be noted that the mobile terminal 100 with a single camera does not have a camera switching function, and therefore does not have the camera switching button 312. When the mobile terminal 100 includes a plurality of cameras, and the cameras are located on two sides of the mobile terminal 100, the mobile terminal 100 has the camera switching function, and may include the camera switching button 312.

If the mobile terminal 100 includes the plurality of cameras, and the cameras are located on the two sides of the mobile terminal 100, a current camera may be selected by tapping the camera switching button 312 in the shooting operation area 310, for example, a front-facing camera or a rear-facing camera may be selected. If the mobile terminal 100 includes only one camera, camera switching is not needed. If the current camera supports a virtual-reality integration shooting function, a multi-virtual-reality integration option appears in the option 321 in the shooting mode selection area 320. If the current camera does not support such a function, a multi-virtual-reality integration option does not appear.

Step 103: Display a candidate virtual object in response to a detected operation of selecting a virtual-reality integration shooting mode by the user.

Specifically, the user may perform an operation on the display interface of the mobile terminal 100, to select the virtual-reality integration shooting mode. For example, the user may tap a virtual-reality integration option to enter the virtual-reality integration shooting mode. In response to the operation of selecting the virtual-reality integration shooting mode by the user, the mobile terminal 100 enters the virtual-reality integration shooting mode, and displays the candidate virtual object.

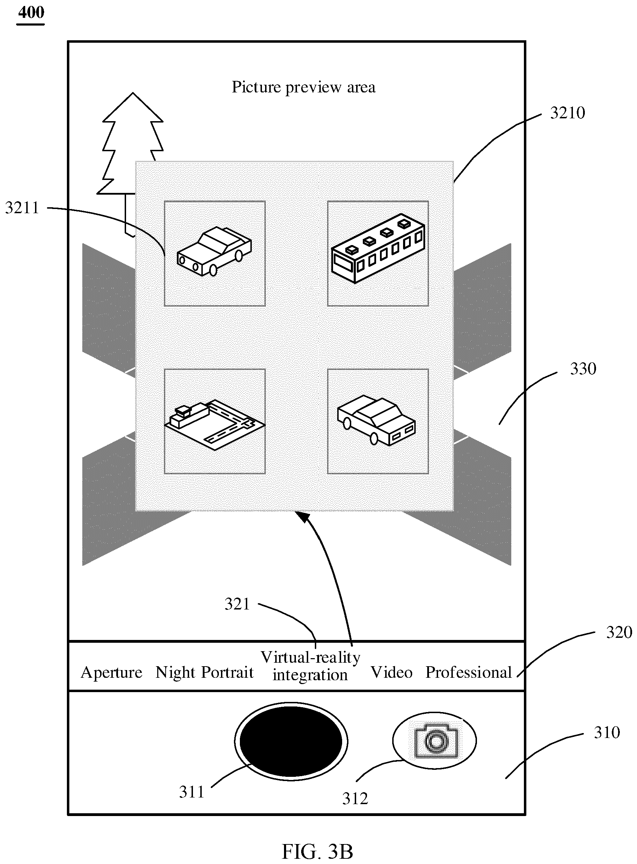

FIG. 3A is used as an example for description. After the user taps the virtual-reality integration option 321, a virtual object candidate area 3210 pops up in the display interface 300, and then a display interface 400 shown in FIG. 3B is obtained. The virtual object may be a 3D model, for example, a 3D virtual character, a 3D virtual animal, or a 3D virtual object. This is not limited in this embodiment of this application. The virtual object candidate area 3210 includes at least one virtual object option 3211 for the user to select the virtual object.

The virtual object option 3211 may be a preview image corresponding to the virtual object. It may be understood that the virtual object option 3211 may alternatively be an icon or another display form. This is not limited in this embodiment of this application.

Further, when the virtual object option 3211 is displayed in the virtual object candidate area 3210, the preset virtual object option 3211 may be displayed. For example, only one preset virtual object option 3211 is pushed each time virtual-reality integration shooting is performed. In other words, only one preset virtual object option 3211 in the virtual object candidate area 3210 is available for selection by the user. It may be understood that the plurality of virtual object options 3211 may be preset. For example, the plurality of preset virtual object options 3211 are pushed in the virtual object candidate area 3210. In this case, the plurality of virtual object options 3211 are available for selection by the user in the virtual object candidate area 3210. One or more virtual objects corresponding to the preset virtual object option 3211 may be pre-stored in the mobile terminal 100, or may be pre-stored in another device.

Optionally, when the virtual object option 3211 is displayed in the virtual object candidate area 3210, the virtual object option 3211 may be further pushed based on a current real environment picture captured by the camera. For example, the virtual object option 3211 may be classified in advance. For example, the virtual object option 3211 may be a character, an animal, a home appliance, or a building. After the camera captures the real environment picture, the mobile terminal 100 may analyze the current real environment picture, to determine a category to which the current real environment picture is related, for example, the category may be the character, the animal, the household appliance, the building, or the like. After determining the category of the current real environment picture, the mobile terminal 100 may perform matching between the category of the current real environment picture and a category of the virtual object option 3211, and push the matched virtual object option 3211. For example, the virtual object option 3211 related to the category of the current real environment picture is displayed in the virtual object candidate area 3210 and selected by the user. In this way, efficiency of selecting the virtual object by the user from the candidate virtual objects can be improved. This further improves user experience.

Step 104: Determine a virtual object in response to a detected operation of selecting the virtual object by the user.

Specifically, the user may perform an operation on the candidate virtual object to select the virtual object. For example, the user may tap an icon of the candidate virtual object to select the virtual object. In response to an operation of selecting the virtual object by the user, the mobile terminal 100 may load the virtual object, and display the virtual object in the picture preview area 330. The virtual object may include an initial state. The initial state may include default size information and default angle information of the virtual object. The size information may be used to identify a size of the virtual object. For example, the size information of the virtual object may be identified by using a length, a width, and a height. The angle information may be used to identify a rotation angle of the virtual object. For example, the angle information of the virtual object may be identified by using a lateral rotation angle and a longitudinal rotation angle. It may be understood that, after loading the virtual object, the mobile terminal 100 may render the virtual object based on the default size information and the default angle information, and display the virtual object on a preview screen.

The virtual object may be pre-stored in the memory 150 of the mobile terminal 100. After selecting the virtual object, the user may directly invoke the virtual object from the memory 150 and load the virtual object. The virtual object may alternatively be stored in another device, for example, stored in a server. After selecting the virtual object, the user may download the virtual object selected by the user from the another device, and load the downloaded virtual object.

FIG. 3B is used as an example for description. The user may perform an operation on the virtual object option 3211 in the virtual object candidate area 3210, to select the virtual object. There are four virtual object options 3211 in the virtual object candidate area 3210, which are respectively a small vehicle 1 in an upper left corner, a large vehicle in an upper right corner, a building in a lower left corner, and a small vehicle 2 in a lower right corner. For example, the user may select the small vehicle 1 by tapping an icon of the small vehicle 1 in the upper left corner. It may be understood that the user may alternatively select the virtual object by performing another operation. This is not limited in this embodiment of this application.

Step 105: Obtain first positioning information of the virtual object, and display the virtual object on the preview screen based on the first positioning information.

Specifically, the first positioning information may include the size information and the angle information of the virtual object in step 104. In addition, the first positioning information may include location information. The location information is used to identify a coordinate location of the virtual object in the picture preview area 330. For example, a center point of the virtual object may be used as the coordinate location. Based on this, the mobile terminal 100 may record the coordinate location of the center point of the virtual object in the picture preview area 330. It may be understood that a picture displayed in the picture preview area 330 is the real environment picture. Therefore, after imaging, for example, after an image corresponding to the real environment picture is generated, coordinates of the virtual object in the picture preview area 330 may be converted into coordinates of the virtual object in the displayed environment picture image.

The first positioning information may be default positioning information of the virtual object. For example, the default size information and the default angle information of the virtual object are displayed in a default location of the picture preview area 330. Alternatively, the virtual object may be displayed in any coordinate location of the picture preview area 330. For example, a coordinate location is randomly selected to display the virtual object. This is not limited in this embodiment of this application.

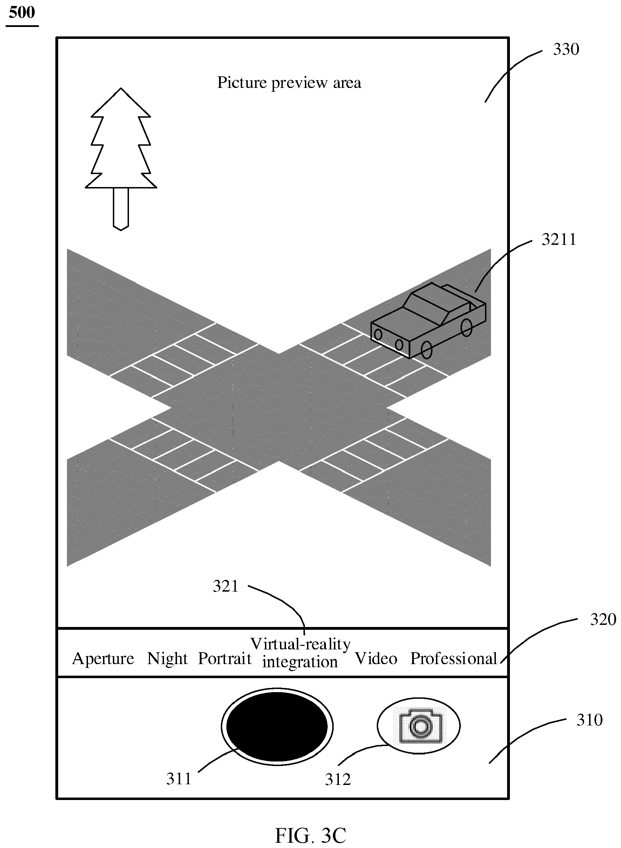

FIG. 3B is used as an example. After receiving the operation of selecting the virtual object (for example, the small vehicle 1) by the user, the mobile terminal 100 obtains the virtual object corresponding to the virtual object option 3211 selected by the user, loads the virtual object, and displays the virtual object in the picture preview area 330 based on the default positioning information of the virtual object, to obtain a display interface 500 shown in FIG. 3C. If the virtual object is already stored in the mobile terminal 100, the mobile terminal 100 may directly invoke and load the virtual object, so that the virtual object is displayed in the picture preview area 330. If the virtual object is not stored in the mobile terminal 100, the mobile terminal 100 may download the virtual object based on a link address of the virtual object option 3211. For example, the link address may be a server address. In this case, the mobile terminal may initiate a request to the server to obtain the virtual object. After obtaining the virtual object by downloading, the mobile terminal 100 may load the virtual object, so that the virtual object is displayed in the picture preview area 330.

Optionally, the user may further change the positioning information of the virtual object in the picture preview area 330 by performing an operation on the virtual object. For example, the user may drag the virtual object to change the location information of the virtual object in the picture preview area 330. The user may rotate the virtual object to change the angle information of the virtual object in the picture preview area 330. The user may scale the virtual object to change the size information of the virtual object in the picture preview area 330. In response to a user operation of changing the positioning information of the virtual object, the mobile terminal 100 may record updated positioning information of the virtual object.

It may be understood that, after the user adjusts a size and an angle of the virtual object, the mobile terminal 100 may further re-render the virtual object based on adjusted size information and adjusted angle information, so that the re-rendered virtual object may be displayed in the preview screen.

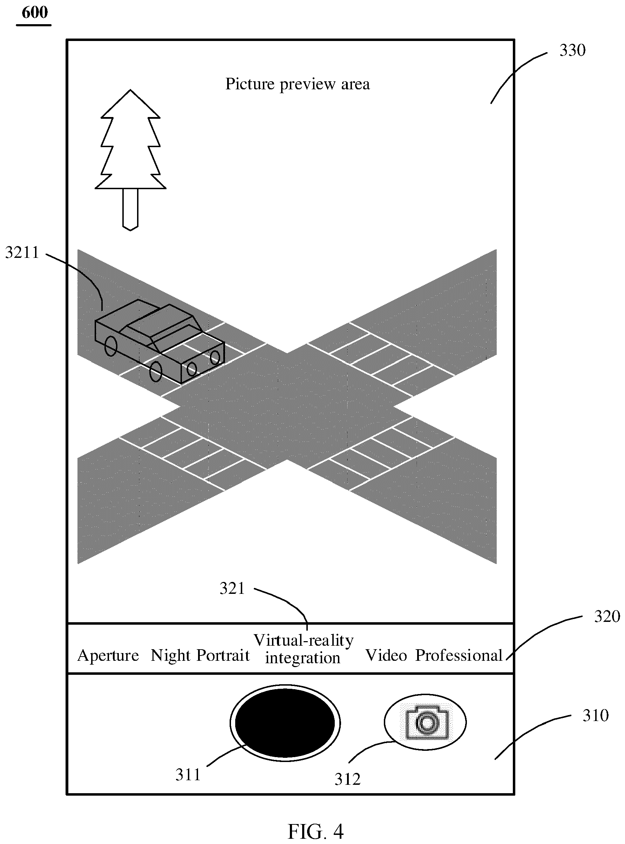

FIG. 3C is used as an example. The user may rotate the virtual object 3211 (for example, the small vehicle 1) at a horizontal angle and move a location of the virtual object, to obtain a display interface 600 shown in FIG. 4. Refer to FIG. 4. After the small vehicle 1 is rotated at the horizontal angle and the location is moved, the small vehicle 1 moves from the left to the right, and the horizontal angle changes. For example, the front of the small vehicle 1 is originally facing the lower left corner, but the front of the small vehicle is facing the lower right corner after the small vehicle is rotated at the horizontal angle. In a process in which the user performs an operation on the virtual object, the user may perform an operation on the touchscreen of the mobile terminal by using a finger, or may implement movement and rotation of the virtual object on the display of the mobile terminal by using a function button. This is not limited in this embodiment of this application.

Step 106: Generate a first image corresponding to a real environment in response to a detected shooting operation.

Specifically, the user may shoot the real environment picture by using the shooting operation, so that the mobile terminal 100 may synthesize the real environment picture and the virtual object into one image. For example, the user may press the shooting button 311 in the shooting operation area 310, to implement a shooting function, so that the first image can be generated in the mobile terminal 100. The mobile terminal 100 may generate the first image in response to the shooting operation of the user. The first image includes only a real scene picture, and does not include the virtual object.

Step 107: Obtain a second image corresponding to the virtual object.

Specifically, the second image corresponding to the virtual object may be obtained based on the first positioning information of the virtual object. For example, the mobile terminal 100 may perform imaging on the virtual object based on the size information and the angle information in the first positioning information of the virtual object, to obtain the second image corresponding to the virtual object. It may be understood that the second image does not include the real scene picture. The second image corresponding to the virtual object may be obtained in a flashing manner, or may be obtained in another image capturing manner. This is not limited in this embodiment of this application.

Step 108: Synthesize the first image and the second image based on the first positioning information to obtain a synthesized third image.

Specifically, the mobile terminal 100 may synthesize the first image and the second image based on the location information in the first positioning information, to obtain the synthesized third image. For example, the mobile terminal 100 may superimpose the second image on the first image based on the location information, to obtain the synthesized third image.

It may be understood that images may be synthesized in a layer combination manner. For example, the first image may be used as a first layer, the second image may be used as a second layer, and the second layer may be superimposed on the first layer, to obtain the synthesized third image. Alternatively, images may be synthesized in another manner. This is not specially limited in this embodiment of this application.

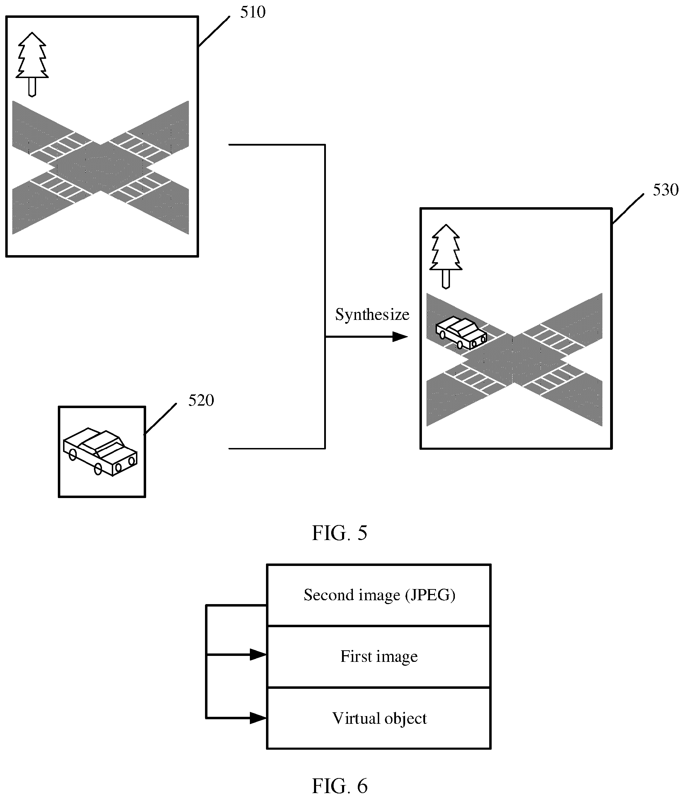

Description is provided with reference to FIG. 5. As shown in FIG. 5, an image 510 is the first image (for example, a real scene image) shot by using the camera of the mobile terminal. An image 520 is the second image corresponding to the virtual object. A synthetic image 530 may be obtained by synthesizing the image 510 and the image 520. For example, the image 520 may be superimposed on the image 510. A location of the image 520 in the image 510 may be determined based on the location information.

Step 109: Display the third image, and store the third image in association with the first image and the virtual object.

Specifically, the mobile terminal 100 may further display the third image, and store the third image. For example, the mobile terminal stores the third image in an album of the mobile terminal 100, so that the user can browse or edit the image. Alternatively, the mobile terminal stores the third image in a cloud or a server. This is not specially limited in this embodiment of this application. The mobile terminal 100 may further store the third image, the first image, and the virtual object in association. For example, the mobile terminal 100 may store the first image, the third image, and the virtual object, and may associate the third image with the first image and the virtual object. A data storage format of the third image may be a JPEG format. Therefore, when browsing the third image, the user can view the third image in the JPEG format. When editing the third image, the user can invoke the first image and the virtual object associated with the third image, and edit the virtual object (for example, adjusting a location, size, and angle of the virtual object) to complete editing of the third image. It may be understood that an association relationship between the third image and the first image and the virtual object may be stored in a local database together with the third image, or may be stored in the cloud or the server. This is not specially limited in this embodiment of this application.

Preferably, to avoid being read by the album in the mobile terminal 100 and affecting system efficiency, the first image may not be stored in the album of the mobile terminal 100 (for example, may be stored in a system file or another file of the mobile terminal 100). In addition, a data format of the first image may be not limited. For example, the data format of the first image may not be limited to JPEG, BMP, or another image format. A directory under which the first image is stored may be a same directory as the shooting application, or may be a different directory. This is not limited in this embodiment of this application.

FIG. 6 shows a data storage form of the third image in the mobile terminal 100. The third image may be in an image format, the first image may be in an image format, the virtual object may be in a 3D project file format, and the third image is associated with the first image and the virtual object. In other words, when the user edits the third image, the first image and the virtual object associated with the third image may be invoked.

Optionally, the third image may be further associated with the first positioning information. The third image is associated with the first positioning information, so that the size information, the location information, and the angle information of the virtual object in the third image may be obtained when the user edits the third image. In this way, when the user edits the third image, the invoked virtual object may be displayed in the first image based on the first positioning information. This improves operation experience of the user.

Step 110: In response to a detected operation of editing the third image, invoke the first image and the virtual object that are associated with the third image.

Specifically, the user may edit the third image stored in the mobile terminal 100. For example, the user may double-click the third image to start editing the third image. In response to the operation of editing the third image by the user, the mobile terminal 100 displays an editing picture of the third image, and invokes the first image and the virtual object that are associated with the third image. In other words, the first image and the virtual object are in a separated state, and the user may edit the virtual object on the first image. For example, the mobile terminal 100 may display the virtual object on the first image based on the stored first positioning information. For example, the mobile terminal 100 may render the virtual object based on the stored size information and the stored angle information, and then display the rendered virtual object on the first image based on the stored location information, so that user can edit the virtual object on the first image.

Optionally, before displaying the virtual object, the mobile terminal 100 may further detect the first positioning information associated with the third image.

If the first positioning information associated with the third image does not exist, in other words, if the first positioning information corresponding to the virtual object is not prestored, the mobile terminal 100 may obtain the initial state of the virtual object that may be, for example, a default size and a default angle of the virtual object. In addition, a coordinate location of the virtual object in the first image may be any location, or may be a default location. This is not limited in this embodiment of this application.

Step 111: In response to a detected operation of editing the virtual object, determine second positioning information of the virtual object and synthesize the first image and a fourth image based on the second positioning information to obtain a fifth image. The fourth image includes the virtual image.

Specifically, the user may further perform an editing operation on the virtual object. For example, the user may drag and scale the virtual object, or change an angle of the virtual object to edit the virtual object. In response to the operation of editing the virtual object by the user, the mobile terminal 100 determines the second positioning information of the virtual object. For example, the mobile terminal 100 may obtain positioning information after the user edits the virtual object (for example, edited location information, edited size information, and/or edited angle information), to obtain the second positioning information. Next, refer to the image synthesis step in step 108. The mobile terminal 100 may render the virtual object based on the edited size information and/or the edited angle information, and generate an image corresponding to the virtual object. Then, the mobile terminal may synthesize the first image and the image (for example, the fourth image) of the virtual object based on location information in the second positioning information, to obtain the fifth image. The fourth image includes the virtual object corresponding to the second positioning information. In other words, the fourth image is an image obtained by performing imaging on the virtual object based on the second positioning information, and the fifth image is an image obtained by synthesizing the first image and the fourth image.

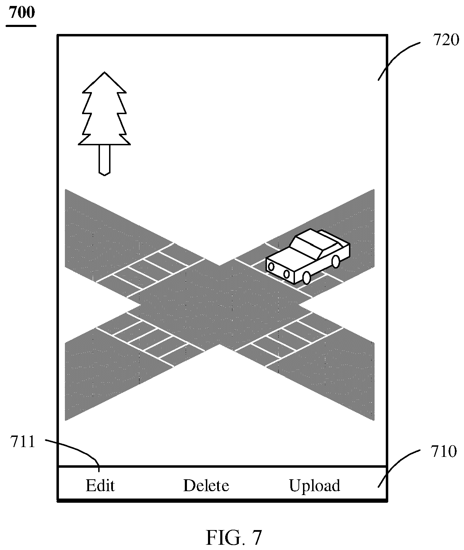

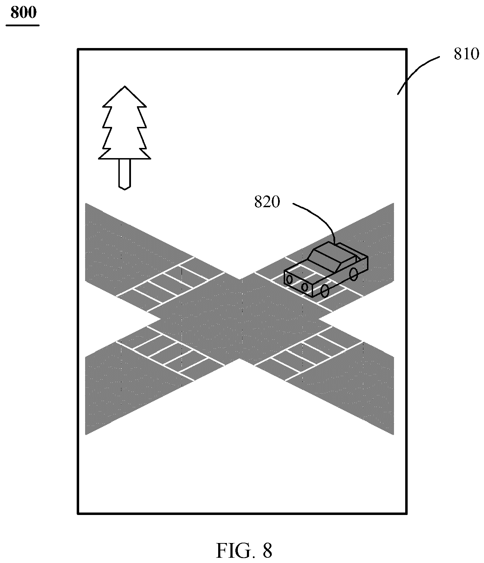

Description is given with reference to FIG. 7 and FIG. 8. When the user edits the third image, for example, when the user opens the album of the mobile terminal 100 to edit the third image, a display picture 700 shown in FIG. 7 may be obtained. The display picture 700 may include a function area 710 and a display area 720. The function area 710 is configured to provide a function option for a user to select, and the function area 710 may include a function option 711 (for example, an editing option). The display area 720 is configured to display the third image, and the virtual object in the third image cannot be edited in the display area 720. After the user taps the editing option in the function option 711, a display picture 800 shown in FIG. 8 may be obtained. The display picture 800 may include a first image 810 and a virtual object 820. It may be understood that, in the display picture 800, the first image 810 is separated from the virtual object 820. In other words, the user may edit the virtual object 820 separately. For example, the user may drag and scale the virtual object 820 and/or change an angle of the virtual object. After editing the virtual object 820, the user updates the positioning information of the virtual object to obtain the second positioning information, and performs imaging on the virtual object based on the second positioning information to obtain the fourth image. The mobile terminal 100 synthesizes the first image and the fourth image to the fifth image. During editing of the virtual object 820, the user may perform an operation on the display of the mobile terminal 100 by using a finger, or may edit the virtual object 820 on the display of the mobile terminal 100 by using the function button. This is not limited in this embodiment of this application.

Further, after the mobile terminal 100 generates the fifth image, the fifth image may be stored in association with the first image and the virtual object. A storage form may be shown in FIG. 6. The fifth image may alternatively be associated with edited second positioning information of the virtual object. During storage of the fifth image, the fifth image may cover the third image in the album or the server, or the fifth image and the third image may coexist in the album or the server. This is not limited in this embodiment of this application.

In this embodiment, when image synthesis is performed on a real environment image and the virtual object, a synthetic image is stored in association with the real environment image and the virtual object, so that when performing post-editing on the synthetic image, the user can invoke the virtual object associated with the synthetic image and can separately edit the virtual object, to avoid image distortion caused by editing the synthetic image. This improves user experience.

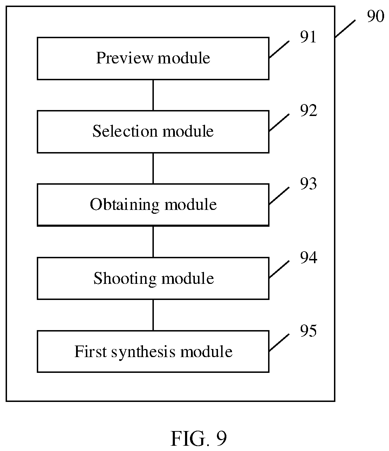

FIG. 9 is a schematic diagram of a structure of an image processing apparatus according to an embodiment of this application. As shown in FIG. 9, the image processing apparatus 90 may include a preview module 91, a selection module 92, an obtaining module 93, a shooting module 94, and a first synthesis module 95.

The preview module 91 is configured to display a preview screen in response to a detected first operation. The preview screen includes a real environment picture.

The selection module 92 is configured to determine a virtual object in response to a detected second operation.

The obtaining module 93 is configured to obtain first positioning information of the virtual object, and display the virtual object on the preview screen based on the first positioning information.

The shooting module 94 is configured to generate a first image and a second image in response to a detected third operation. The first image includes the real environment picture, and the second image includes the virtual object corresponding to the first positioning information.

The first synthesis module 95 is configured to synthesize the first image and the second image based on the first positioning information to generate a third image, and display the third image. The third image is associated with the first image and the virtual object.

In a possible implementation, the selection module 92 includes a display submodule 921 and a selection submodule 922.

The display submodule 921 is configured to display at least one candidate virtual object in response to the detected second operation.

The selection submodule 922 is configured to determine the virtual object in the candidate virtual object in response to a detected fourth operation.

In a possible implementation, the display submodule 921 includes an identification unit 9211 and a recommendation unit 9212.

The identification unit 9211 is configured to: in response to the detected second operation, identify a type of a real environment in the preview screen, to obtain an environment type.

The recommendation unit 9212 is configured to recommend displaying the candidate virtual object based on the environment type.

In a possible implementation, the obtaining module 93 is further configured to determine the first positioning information of the virtual object on the preview screen in response to a detected fifth operation.

In a possible implementation, the first positioning information includes default positioning information of the virtual object.

In a possible implementation, the third image is associated with the first positioning information.

In a possible implementation, the apparatus 90 further includes an invoking module 96 and an editing module 97.

The invoking module 96 is configured to separately invoke, in response to a detected sixth operation, the first image and the virtual object that are associated with the third image.

The editing module 97 is configured to display the virtual object in the first image based on the first positioning information, so that a user edits the virtual object.

In a possible implementation, the apparatus 90 further includes an updating module 98 and a second synthesis module 99.

The updating module 98 is configured to determine second positioning information of the virtual object in the first image in response to a detected seventh operation.

The second synthesis module 99 is configured to synthesize the first image and a fourth image based on the second positioning information to generate a fifth image, and display the fifth image. The fourth image includes the virtual object corresponding to the second positioning information, and the fifth image is associated with the first image and the virtual object.

In a possible implementation, the apparatus 90 further includes a storage module 9A.

The storage module 9A is configured to overwrite the third image with the fifth image and perform storage.

The image processing apparatus provided in the embodiment shown in FIG. 9 may be configured to perform the technical solutions of the method embodiments shown in FIG. 2 to FIG. 8 in this application. For an implementation principle and a technical effect of the image processing apparatus, refer to related descriptions in the method embodiments.

It should be understood that division into the foregoing modules of the image processing apparatus shown in FIG. 9 is merely logical function division. In actual implementation, all or some of the modules may be integrated into one physical entity, or may be physically separated. In addition, all of the modules may be implemented in a form of software invoked by using a processing element or may be implemented in a form of hardware. Alternatively, some modules may be implemented in a form of software invoked by using the processing element, and some modules are implemented in a form of hardware. For example, a detection module may be a separately disposed processing element, or may be integrated into a chip of an electronic device for implementation. An implementation of another module is similar to the implementation of the detection module. In addition, all or some of these modules may be integrated, or may be implemented independently. In an implementation process, steps in the foregoing methods or the foregoing modules can be implemented by using a hardware integrated logical circuit in the processing element, or by using instructions in a form of software.

For example, the foregoing modules may be one or more integrated circuits configured to implement the foregoing method, for example, one or more application-specific integrated circuits (Application-Specific Integrated Circuit, briefly referred to as an ASIC below), one or more digital signal processors (Digital Signal Processor, briefly referred to as a DSP below), or one or more field programmable gate arrays (Field Programmable Gate Array, briefly referred to as an FPGA below). For another example, the modules may be integrated together, and implemented in a form of a system-on-a-chip (System-On-a-Chip, briefly referred to as an SOC below).

It may be understood that the interface connection relationship between modules shown in this embodiment of the present invention is merely an example for description, and does not constitute a structural limitation on the mobile terminal 100. In some other embodiments of this application, the mobile terminal 100 may alternatively use an interface connection manner different from that in the foregoing embodiment, or a combination of a plurality of interface connection manners.

It may be understood that, to implement the foregoing functions, the foregoing mobile terminal includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In the embodiments of this application, functional modules of the mobile terminal and the like may be obtained through division based on the foregoing method embodiments. For example, functional modules may be obtained through division in one-to-one correspondence with the functions, or two or more functions may be integrated into one processing module. The integrated module may be implemented in a form of hardware, or may be implemented in a form of a software functional module. It should be noted that in the embodiments of the present invention, module division is an example, and is merely a logical function division. During actual implementation, another division manner may be used.

The foregoing descriptions about implementations allow a person skilled in the art to understand that, for the purpose of convenient and brief description, division into the foregoing functional modules is used as an example for illustration. In actual application, the foregoing functions may be allocated to different functional modules and implemented according to a requirement, that is, an inner structure of an apparatus is divided into different functional modules to implement all or some of the functions described above. For a detailed working process of the foregoing system, apparatus, and units, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium, and includes several instructions to enable a computer device (which may be a personal computer, a server, a network device, or the like) or the processor 130 to perform all or some of the steps of the method described in embodiments of this application. The foregoing storage medium includes any medium that can store program code, for example, a flash memory, a removable hard disk drive, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image processing method, applied to a mobile terminal, wherein at least one camera is disposed on the mobile terminal, and the method comprises:
displaying a preview screen in response to a detected first operation, wherein the preview screen comprises a real environment picture;
determining a virtual object;
obtaining first positioning information of the virtual object, and displaying the virtual object on the preview screen based on the first positioning information;
generating a first image and a second image in response to a detected second operation, wherein the first image comprises the real environment picture, and the second image comprises the virtual object corresponding to the first positioning information; and
synthesizing the first image and the second image based on the first positioning information to generate a third image, and displaying the third image, wherein the third image is associated with the first image and the virtual object.

2. The method according to claim 1, wherein the determining a virtual object comprises:
displaying at least one candidate virtual object; and
determining the virtual object in the candidate virtual object in response to a detected third operation.

3. The method according to claim 2, wherein the displaying at least one candidate virtual object comprises:
identifying a type of a real environment on the preview screen, to obtain an environment type; and
recommending displaying the candidate virtual object based on the environment type.

4. The method according to any one of claims 1 to 3, wherein the obtaining first positioning information of the virtual object comprises:
determining the first positioning information of the virtual object on the preview screen in response to a detected fourth operation.

5. The method according to any one of claims 1 to 3, wherein the first positioning information comprises default positioning information of the virtual object.

6. The method according to any one of claims 1 to 5, wherein the third image is associated with the first positioning information.

7. The method according to claim 6, wherein after the displaying the third image, the method further comprises:
in response to a detected fifth operation, separately invoking the first image and the virtual object that are associated with the third image; and
displaying the virtual object in the first image based on the first positioning information, so that a user edits the virtual object.

8. The method according to claim 7, wherein after the displaying the virtual object in the first image, the method further comprises:
determining second positioning information of the virtual object in the first image in response to a detected sixth operation; and
synthesizing the first image and a fourth image based on the second positioning information to generate a fifth image, and displaying the fifth image, wherein the fourth image comprises the virtual object corresponding to the second positioning information, and the fifth image is associated with the first image and the virtual object.

9. The method according to claim 8, wherein after the displaying the fifth image, the method further comprises:
overwriting the third image with the fifth image, and performing storage.

10. A mobile terminal, comprising a display, a processor, and a memory, wherein the memory is configured to store computer program code, the computer program code comprises instructions, and when the instructions are run by the processor, the mobile terminal is enabled to perform the following steps:
displaying a preview screen in response to a detected first operation, wherein the preview screen comprises a real environment picture;
determining a virtual object;
obtaining first positioning information of the virtual object, and displaying the virtual object on the preview screen based on the first positioning information;
generating a first image and a second image in response to a detected second operation, wherein the first image comprises the real environment picture, and the second image comprises the virtual object corresponding to the first positioning information; and
synthesizing the first image and the second image based on the first positioning information to generate a third image, and displaying the third image, wherein the third image is associated with the first image and the virtual object.

11. The mobile terminal according to claim 10, wherein when the instructions are executed by the processor, a step of determining the virtual object by the mobile terminal comprises:
displaying at least one candidate virtual object; and
determining the virtual object in the candidate virtual object in response to a detected third operation.

12. The mobile terminal according to claim 11, wherein when the instructions are executed by the processor, a step of displaying the at least one candidate virtual object by the mobile terminal comprises:
identifying a type of a real environment on the preview screen, to obtain an environment type; and
recommending displaying the candidate virtual object based on the environment type.

13. The mobile terminal according to any one of claims 10 to 12, wherein when the instructions are executed by the processor, a step of obtaining the first positioning information of the virtual object by the mobile terminal comprises:
determining the first positioning information of the virtual object on the preview screen in response to a detected fourth operation.

14. The mobile terminal according to any one of claims 10 to 12, wherein the first positioning information comprises default positioning information of the virtual object.

15. The mobile terminal according to any one of claims 10 to 14, wherein the third image is associated with the first positioning information.

16. The mobile terminal according to claim 15, wherein when the instructions are executed by the processor, after performing a step of displaying the third image, the mobile terminal further performs the following steps:
in response to a detected fifth operation, separately invoking the first image and the virtual object that are associated with the third image; and
displaying the virtual object in the first image based on the first positioning information, so that a user edits the virtual object.

17. The mobile terminal according to claim 16, wherein when the instructions are executed by the processor, after performing a step of displaying the virtual object in the first image, the mobile terminal further performs the following steps:
determining second positioning information of the virtual object in the first image in response to a detected sixth operation; and
synthesizing the first image and a fourth image based on the second positioning information to generate a fifth image, and displaying the fifth image, wherein the fourth image comprises the virtual object corresponding to the second positioning information, and the fifth image is associated with the first image and the virtual object.

18. The mobile terminal according to claim 17, wherein when the instructions are executed by the processor, after performing the step of displaying the virtual object in the first image, the mobile terminal further performs the following step:
overwriting the third image with the fifth image, and performing storage.

19. A computer-readable storage medium, comprising computer instructions, wherein when the computer instructions are run on a mobile terminal, the mobile terminal is enabled to perform the image processing method according to any one of claims 1 to 9.

20. A computer program product, wherein when the computer program product runs on a computer, the computer is enabled to perform the image processing method according to any one of claims 1 to 9.
